# EUROPÄISCHE PATENTSCHRIFT

(11) **EP 3 722 192 B1**
(45) Veröffentlichungstag und Bekanntmachung des Hinweises auf die Patenterteilung: **10.06.2026**
(21) Anmeldenummer: 20167450.4
(22) Anmeldetag: 01.04.2020
(51) Int. Cl.: B62M 6/40, F16C 25/08, F16H 57/021

(54) **ANTRIEBSEINHEIT**
DRIVE UNIT
UNITÉ D'ENTRAÎNEMENT

(30) Priorität: 11.04.2019 DE 102019205246
(43) Veröffentlichungstag der Anmeldung: 14.10.2020
(73) Patentinhaber: Robert Bosch GmbH, 70442 Stuttgart (DE)
(72) Erfinder: Braun, Sigmund, 72127 Kusterdingen (DE); Doelling, Rolando, 72379 Hechingen (DE); Holst, Stefan, 70794 Filderstadt (DE)

(56) Entgegenhaltungen:
- EP-A1- 0 943 842
- EP-A1- 1 231 701
- EP-A1- 3 572 301
- WO-A1-2007/119915
- CN-A- 104 377 881
- CN-A- 104 702 044
- CN-A- 108 674 179
- CN-U- 201 677 691
- DE-A1- 10 117 573
- DE-A1- 102012 208 972
- DE-A1- 4 039 453
- DE-A1- 4 218 167
- JP-A- 2007 261 487
- JP-A- 2009 280 174
- JP-A- 2010 012 953
- US-A1- 2006 238 051

## Beschreibung

### Stand der Technik

Die vorliegende Erfindung betrifft eine Wellenanordnung, eine Antriebseinheit und eine Arbeitsvorrichtung. Die vorliegende Erfindung betrifft eine Wellenanordnung für ein Fahrrad, Elektrofahrrad, eBike, Pedelec und/oder S-Pedelec, eine Antriebseinheit für eine mit Motorkraft und zusätzlich mit Muskelkraft antreibbare Arbeitsvorrichtung, für ein Fahrrad, Elektrofahrrad, eBike, Pedelec und/oder S-Pedelec sowie ein Fahrrad, Elektrofahrrad, eBike, Pedelec und/oder S-Pedelec als solche.

Viele Arbeitsvorrichtungen werden unter Verwendung einer Antriebseinheit, welche einen Motor umfasst, angetrieben. Dabei befinden sich der Motor oder Teile davon und/oder Komponenten eines zu Grunde liegenden Getriebes zumindest teilweise an oder in einem Gehäuse, um die entsprechenden Betriebsteile nach außen hin zu schützen und um deren Halterung und Lagerung zu gewährleisten und gegebenenfalls einen abgeschlossenen Schmierraum zu definieren. Bei herkömmlichen Anordnungen für entsprechende Wellen ist problematisch, dass zwar einerseits eine Lagerung und Ausrichtung einer zu Grunde liegenden Welle durch entsprechend vorgesehene Lager mit hoher Präzision gewährleistet werden muss, andererseits herkömmlicherweise jedoch eine jeweilige Welle für eine korrekte Funktion axial vorgespannt werden muss. Zusätzlich ist die Übertragung mechanischer Schwingungen aus dem Lauf der Welle nach außen hin möglichst zu vermeiden. All diese Nebenbedingungen sind herkömmlicherweise nur schwer zu erfüllen, zumindest doch mit einem hohen konstruktiven Aufwand.

CN 201 677 691 U offenbart die Merkmale des Oberbegriffes des Anspruchs 1.

### Offenbarung der Erfindung

Die erfindungsgemäße Wellenanordnung mit den Merkmalen des Anspruchs 1 weist demgegenüber den Vorteil auf, dass einerseits die Ausrichtung und Lagerung einer zu Grunde liegenden Welle mit hoher Präzision auch unter Last gewährleistet werden kann, andererseits aber auch eine für die korrekte Funktion erforderliche Vorspannung zu einer und/oder bei einer Unterdrückung induzierter Schwingungen erzeugt und aufgeprägt wird. Dies wird erfindungsgemäß mit den Merkmalen des Anspruchs 1 dadurch erreicht, dass eine Wellenanordnung für eine Arbeitsvorrichtung, ein Fahrrad, Elektrofahrrad, eBike, Pedelec und/oder S-Pedelec, welches bzw. welche ausgebildet ist bzw. sind mit einer Welle, mit mindestens einem ersten Lager und einem zweiten Lager, welche zum Lagern und Ausrichten der Welle an oder in einem zu Grunde liegenden Gehäuse ausgebildet sind, und mit einem zusätzlichen dritten Lager, welches als Vorspann- und/oder Dämpfungslager und dazu eingerichtet ist, die Welle axial vorzuspannen und/oder gegenüber mechanischen Vibrationen - insbesondere nach außen hin - zu dämpfen.

Die Unteransprüche zeigen bevorzugte Weiterbildungen der Erfindung. Die Erfindung betrifft eine Antriebseinheit für ein mit Motorkraft und zusätzlich mit Muskelkraft antreibbares Elektrofahrrad, eBike, Pedelec und/ oder S-Pedelec,mit:- einem Motor ,- einem Getriebe und- einem Gehäuse , in dessen Innerem der Motor und/oder das Getriebe zumindest teilweise aufgenommen und/oder gelagert ist bzw. sind,wobei das Getriebe und/oder der Motor eine Welle mit einer Wellenanordnung aufweist bzw. aufweisen

Das dritte Lager weist zum Vorspannen der Welle einen Abstützring und ein Wälzlager auf, wobei letzteres insbesondere nach Art eines Kugellagers oder Rillenkugellagers ausgebildet ist. Gemäß einem weiteren bevorzugten Ausführungsbeispiel der erfindungsgemäßen Quellenanordnung weist das dritte Lager zum Dämpfen mechanischer Vibrationen der Welle ein Dämpfungselement auf.

Dies ist nach Art eines - ein Ende der Welle mittelbar oder unmittelbar axial einfassenden - elastischen Elements ausgebildet , insbesondere mit oder aus einem elastischen und/oder dämpfenden Material, vorzugsweise mit oder aus Elastomer oder Elastomerschaum oder dergleichen. Bei einer anderen bevorzugten Weiterbildung der erfindungsgemäßen Wellenanordnung ist bzw. sind das erste Lager als in Bezug auf die Welle endständiges Loslager und/oder das zweite Lager als in Bezug auf die Welle nicht-endständiges und insbesondere mittelständiges Festlager ausgebildet. Gemäß einer anderen bevorzugten Weiterbildung der erfindungsgemäßen Wellenanordnung ist eine jeweilige Welle als Welle eines Getriebes und/oder als Welle eines Antriebs, als Rotorwelle für einen Rotor eines elektrischen Antriebs, für ein Getriebe und/oder für eine Antriebseinheit einer mit Motorkraft und insbesondere zusätzlich mit Muskelkraft antreibbaren Arbeitsvorrichtung, eines Fahrzeugs, Fahrrads, Elektrofahrrads, eBikes, Pedelecs und/oder S-Pedelecs ausgebildet.

Ferner betrifft die vorliegende Erfindung gemäß einem anderen Aspekt eine mit Motorkraft und gegebenenfalls zusätzlich mit Muskelkraft antreibbare Arbeitsvorrichtung, Fahrrad, Elektrofahrrad, eBike, Pedelec und/oder S-Pedelec. Die Arbeitsvorrichtung ist mit einer erfindungsgemäß ausgestalteten Antriebseinheit und mit einer Steuereinheit ausgebildet, welche zur Steuerung der Antriebseinheit eingerichtet ist.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrads, bei welchem eine Ausführungsform der Erfindung realisiert ist.
- Figuren 2 bis 5: zeigen in schematischen, teilweise geschnittenen und/oder perspektivischen Ansichten eine Ausführungsform der erfindungsgemäßen Wellenanordnung bei einer Ausführungsform der erfindungsgemäßen Antriebseinheit.

### Bevorzugte Ausführungsformen der Erfindung

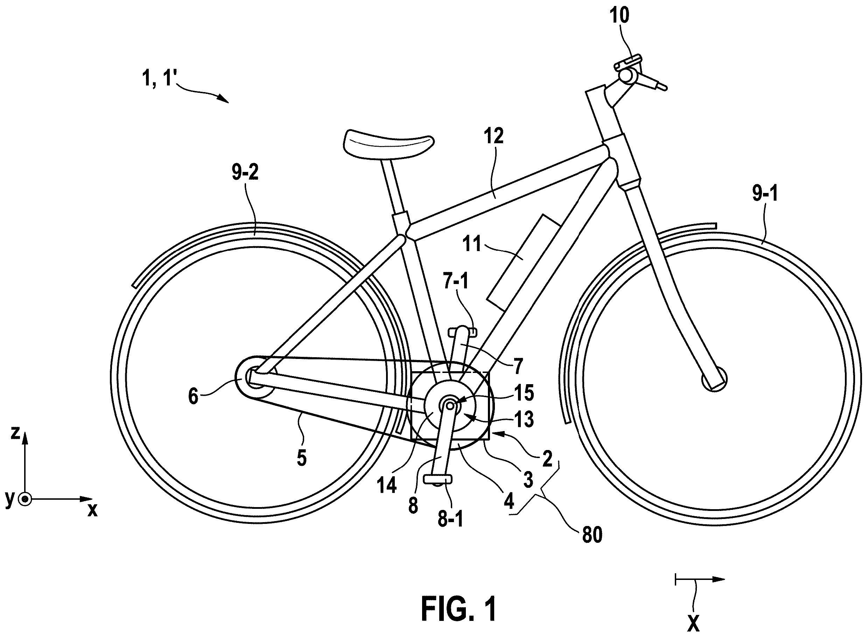

Nachfolgend werden unter Bezugnahme auf die Figuren 1 bis 5 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad 1' als eine bevorzugte Ausführungsform der erfindungsgemäßen Arbeitsvorrichtung 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 oder Motor ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine erfindungsgemäß aufgebaute und eingerichtete Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die Antriebseinheit 80 des erfindungsgemäßen Fahrzeuges 1 aus Figur 1 weist den Kurbeltrieb 2 und den elektrischen Antrieb 3 oder Motor auf, wobei die von letzterem erzeugbaren oder erzeugten Drehmomente zur Unterstützung eines muskulär durch den Fahrer aufgebrachten Drehmoments über eine entsprechende und in Figur 1 nicht explizit dargestellte Übertragungseinrichtung aufnehmbar und an das Kettenblatt als Abtriebselement 4 übertragbar sind.

Die Steuereinheit 10 ist dazu eingerichtet, ein durch den Antrieb 80 erzeugtes und auf die Abtriebswelle 15, insbesondere im Sinne einer Kurbelwelle des Fahrzeugs 1, aufbringbares und/oder aufgebrachtes Motormoment zur Unterstützung des muskulär vom Fahrer aufgebrachten Drehmoments zu steuern und/oder zu regeln.

Wie oben bereits im Detail dargelegt wurde besteht ein Kernaspekt der vorliegenden Erfindung darin, eine Wellenanordnung 30 für die Arbeitsvorrichtung 1 und insbesondere für ein entsprechendes Fahrzeug 1' zu schaffen, wobei eine Welle 32 der zu Grunde liegenden Antriebseinheit 80, zum Beispiel die eines Motors 3 und/oder eines Getriebes 20, neben ersten und zweiten Lagern 33 und 34 zum Lagern und Ausrichten der Welle 32 an oder in einem Gehäuse 40, 50 ein zusätzlich und insbesondere drittes Lager 36 als Vorspann- und/oder Dämpfungslager aufweist, welches eingerichtet ist, die zu Grunde liegende Welle 32 axial vorzuspannen und/oder gegenüber mechanischen Vibrationen, vorzugsweise nach außen hin, also außerhalb der Gehäuse 40, 50, zu dämpfen.

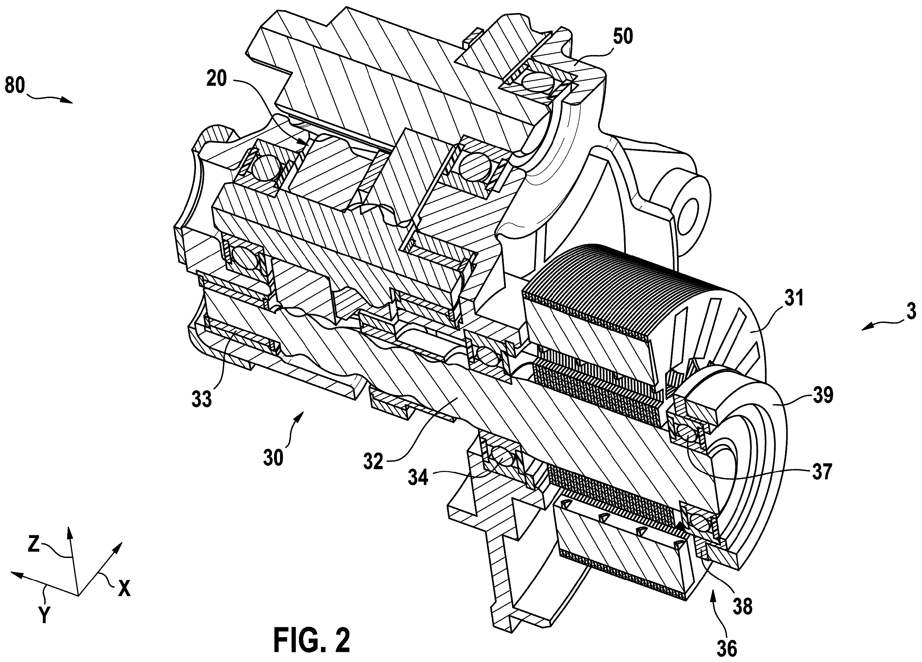

Zur weiteren Erläuterung der vorliegenden Erfindung zeigen die Figuren 2 bis 5 in schematischen, teilweise geschnittenen und/oder perspektivischen Ansichten eine Ausführungsform der erfindungsgemäßen Wellenanordnung 30 bei einer Ausführungsform der erfindungsgemäßen Antriebseinheit 80.

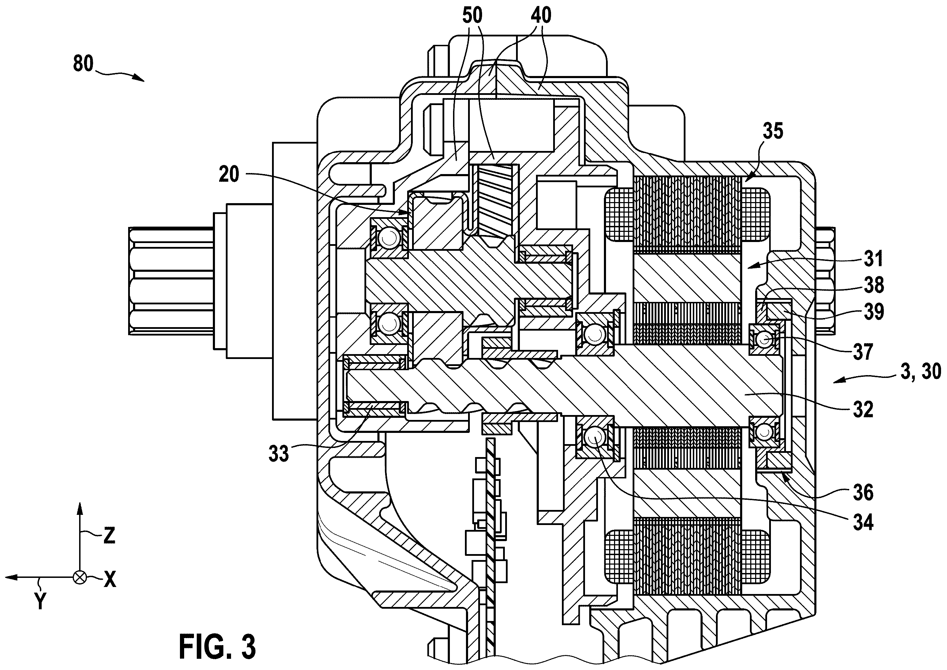

Dabei zeigen die Figuren 2 und 3 in perspektivischer bzw. in Seitenansicht und jeweils teilweise geschnitten eine der Erfindung zu Grunde liegende Antriebseinheit 80 für das erfindungsgemäße Fahrzeug 1' in Gänze.

Gemäß den Figuren 2 und 3 weist die Antriebseinheit 80 unter anderem einen elektrischen Antrieb 3 auf, welcher von einem Elektromotor gebildet wird und somit Rotor 31 und Stator 35 umfasst sowie ein äußeres Gehäuse 40 und ein inneres Gehäuse 50.

Die vorgesehenen ersten und zweiten Lager 33 und 34 lagern die Rotorwelle 32 nach Art einer erfindungsgemäßen Wellenanordnung 30 am oder im Gehäuse 40, 50. Erfindungsgemäß ist zusätzlich ein drittes Lager als Vorspann- und/oder Dämpfungslager mit einem Abstützring 38, einem Wälzlager 37 in Form eines Kugellagers oder eines Rillenkugellagers und mit einem Dämpfungselement 39 endständig ausgebildet.

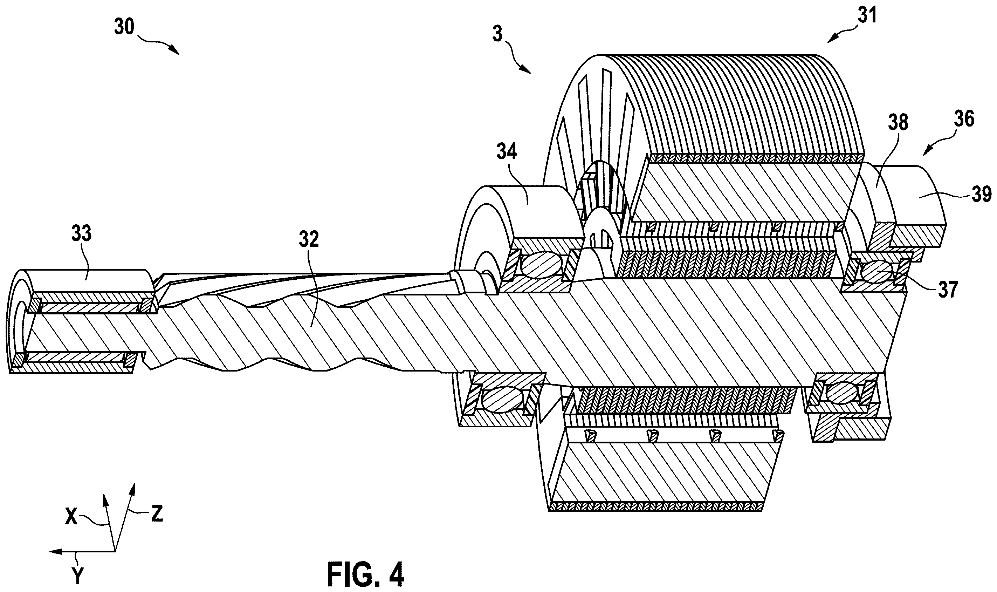

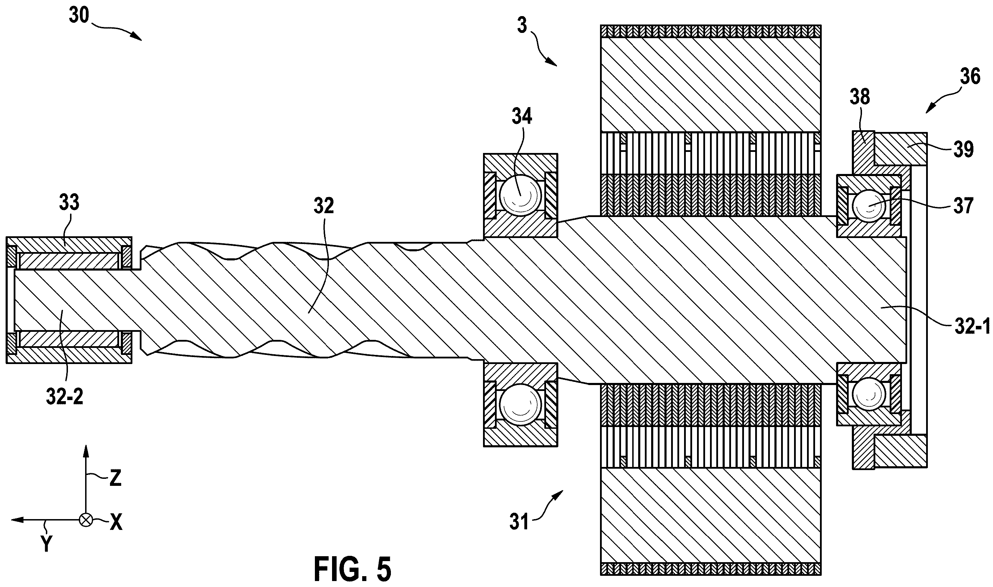

Die Figuren 4 und 5 zeigen in perspektivischer bzw. in Seitenansicht und jeweils teilweise geschnitten die Wellenanordnung 30 als solche, nämlich eine zu Grunde liegende Rotorwelle 32 eines Rotors 31, wobei die Rotorwelle 32 - neben einem ersten und in Bezug auf die Welle 32 endständigen Lager als Loslager 33 und einem zweiten und in Bezug auf die Welle 32 nicht endständigen und insbesondere im Wesentlichen mittelständigen Festlager 34 am dem Loslager 33 gegenüberliegenden weiteren Ende 32-1 - mit einem endständigen Festlager als drittem Lager an einem hier nicht dargestellten Gehäuse 40, 50 gelagert und gehaltert ist oder wird, wobei das dritte Lager 36 auf Grund des Abstützrings 38 mit Rillenkugellager 37 der Vorspannung der Welle 32 dient. Zusätzlich ist optional ein Dämpfungselement 39 ausgebildet, welches eine Dämpfung mechanischer Schwingungen bewirkt.

Diese und weitere Merkmale und Eigenschaften der vorliegenden Erfindung werden an Hand der folgenden Darlegungen weiter erläutert:
Im Markt befindliche oder sonst bekannte Antriebseinheiten 80 verwenden für eine axiale Vorspannung - zum Beispiel von Getriebewellen oder Rotorwellen - üblicherweise zusätzlich vorzusehende elastische Elemente, z.B. Federn, Wellfedern oder dergleichen, über eines der zwei üblicherweise ausgebildeten Lager.

Bei alternativen Konzepten kann zum Beispiel eines der herkömmlichen Lager in einer Elastomermanschette aufgenommen sein oder werden.

Aktuelle Konzepte verwenden die Lagerungen einer Welle gleichzeitig auch zur Vorspannung der Welle und teils auch zu Dämpfung von Vibrationen.

Bei der Verwendung von Federn oder Wellenfedern ist üblicherweise keine Dämpfung von Schwingungen vorgesehen, so dass Vibrationen zum Beispiel ungedämpft über den Lageraußenring übertragen werden.

Bei der alternativen herkömmlichen Ausgestaltung mit Elastomermanschette ist die Präzision der Lagerung unter Last eingeschränkt.

Durch die erfindungsgemäße Ausgestaltung einer Wellenanordnung 30 ist eine gezielte Vorspannung von zu Grunde liegenden Wellen 32, zum Beispiel von Rotorwellen oder Getriebewellen, über ein zusätzliches Lager 36 als Vorspann- und/oder Dämpfungslager mit gleichzeitiger Reduktion induzierter Vibrationen, möglich.

Dies wird erfindungsgemäß durch die Trennung der Funktionen (i) Lagerung der Welle 32 einerseits - realisiert über die herkömmlich vorgesehenen Lager 33 und 34 - und (ii) Vorspannung und/oder Dämpfung der Welle 32 andererseits - realisiert über das neue vorzusehende Vorspann- und/oder Dämpfungslager 36 - erreicht, so dass die Welle auch unter Last präzise gelagert werden kann und dennoch Vibrationen nach außen hin gedämpft werden können.

Durch gezielte Materialauswahl können insbesondere Resonanzen gedämpft werden.

Die zusätzliche Lagerstelle für das Vorspann- und/oder Dämpfungslager 36 besteht zum Beispiel aus:
- einem Wälzlager 37, z.B. einem Rillenkugellager,
- einem Dämpfungselement 39, z.B. aus einem Elastomer, welches endständig angebracht ist und/oder
- je nach Ausführung zusätzlichen Abstützringen 38.

## Patentansprüche

1. Antriebseinheit (80) für ein mit Motorkraft und zusätzlich mit Muskelkraft antreibbares Elektrofahrrad, eBike, Pedelec und/oder S-Pedelec,
mit:
- einem Motor (3),
- einem Getriebe (20) und
- einem Gehäuse (40, 50), in dessen Innerem (40i, 50i) der Motor (3) und/oder das Getriebe (20) zumindest teilweise aufgenommen und/oder gelagert ist bzw. sind,
wobei das Getriebe (20) und/oder der Motor (3) eine Welle (32) mit einer Wellenanordnung (30) aufweist bzw. aufweisen, wobei die Wellenanordnung zusätzlich Folgendes umfasst:
- mindestens ein erstes Lager (33) und ein zweites Lager (34), welche zum Lagern und Ausrichten der Welle (32) an oder in dem Gehäuse (40, 50) ausgebildet sind,
- ein zusätzliches drittes Lager (36), welches als Vorspann- und Dämpfungslager dazu eingerichtet ist, die Welle (32) axial vorzuspannen und gegenüber mechanischen Vibrationen zu dämpfen,
**dadurch gekennzeichnet, dass**
- das dritte Lager (36) zum Vorspannen der Welle (32) einen Abstützring (38) und ein Wälzlager (37) aufweist, und
- das dritte Lager (36) zum Dämpfen mechanischer Vibrationen der Welle (32) ein Dämpfungselement (39) aufweist, nach Art eines ein Ende (32-1) der Welle (32) mittelbar oder unmittelbar axial einfassenden elastischen Elements mit oder aus einem elastischen und/oder dämpfenden Material.

2. Antriebseinheit (80)nach Anspruch 1, bei welcher das dritte Lager (36) als - insbesondere in Bezug auf die Welle (32) endständiges - Festlager und/oder zur Montage an oder in einem Gehäuse (40, 50) ausgebildet ist.

3. Antriebseinheit (80) nach einem der vorangehenden Ansprüche, bei welcher das erste Lager (33) als in Bezug auf die Welle (32) endständiges Loslager und/oder das zweite Lager (34) als in Bezug auf die Welle (32) nicht-endständiges und insbesondere mittelständiges Festlager ausgebildet ist bzw. sind.

4. Antriebseinheit (80) nach einem der vorangehenden Ansprüche, bei welcher eine jeweilige Welle (32) als Welle eines Getriebes (20) und/oder als Welle eines Antriebs (80), als Rotorwelle für einen Rotor (31) eines elektrischen Antriebs (3), für ein Getriebe (20) und/oder für eine Antriebseinheit (80) einer mit Motorkraft und insbesondere zusätzlich mit Muskelkraft antreibbaren Arbeitsvorrichtung (1), eines Fahrzeugs (1'), Fahrrads, Elektrofahrrads, eBikes, Pedelecs und/oder S-Pedelecs ausgebildet ist.

5. Mit Muskelkraft und zusätzlich mit Motorkraft antreibbares Elektrofahrrad, eBike, Pedelec und/oder S-Pedelec, mit einer Antriebseinheit (80) nach einem der vorherigen Ansprüche und mit einer Steuereinheit (10), welche zur Steuerung der Antriebseinheit (80) eingerichtet ist.

## Claims

1. Drive unit (80) for an electric bicycle, e-bike, pedelec and/or S-pedelec, which can be driven by motor power and additionally by muscle power,
with:
- a motor (3),
- a transmission (20), and
- a housing (40, 50), in the interior (40i, 50i) of which the motor (3) and/or the transmission (20) is or are at least partially received and/or mounted, wherein the transmission (20) and/or the motor (3) have or has a shaft (32) with a shaft arrangement (30), wherein the shaft arrangement additionally comprises the following:
- at least one first bearing (33) and one second bearing (34), which are designed for mounting and orienting the shaft (32) on or in the housing (40, 50),
- an additional third bearing (36), which is configured as a preloading and damping bearing to axially preload the shaft (32) and to damp it with respect to mechanical vibrations,
**characterized in that**
- the third bearing (36) has, for preloading the shaft (32), a supporting ring (38) and an anti-friction bearing (37), and
- the third bearing (36) has, for damping mechanical vibrations of the shaft (32), a damping element (39), in the manner of an elastic element indirectly or directly axially enclosing one end (32-1) of the shaft (32), with or made of an elastic and/or damping material.

2. Drive unit (80) according to Claim 1, in which the third bearing (36) is designed as a fixed bearing - in particular at the end in relation to the shaft (32) - and/or for mounting on or in a housing (40, 50).

3. Drive unit (80) according to either of the preceding claims, in which the first bearing (33) is designed as a floating bearing which is at the end in relation to the shaft (32) and/or the second bearing (34) is designed as a fixed bearing which is not at the end and, in particular, is at the centre in relation to the shaft (32).

4. Drive unit (80) according to one of the preceding claims, in which a respective shaft (32) is designed as a shaft of a transmission (20) and/or as a shaft of a drive (80), as a rotor shaft for a rotor (31) of an electric drive (3), for a transmission (20) and/or for a drive unit (80) of a working device (1) which can be driven by motor power and, in particular additionally, by muscle power, of a vehicle (1'), bicycle, electric bicycle, e-bike, pedelec and/or S-pedelec.

5. Electric bicycle, e-bike, pedelec and/or S-pedelec, which can be driven by muscle power and additionally by motor power, having a drive unit (80) according to one of the preceding claims and having a control unit (10) which is configured to control the drive unit (80).

## Revendications

1. Unité d'entraînement (80) pour bicyclette électrique, eBike, pedelec et/ou S-pedelec, pouvant être entraîné(e) par force motrice ainsi qu'en outre, par force musculaire,
comportant :
- un moteur (3),
- une transmission (20) et
- un carter (40, 50), à l'intérieur (40i, 50i) duquel le moteur (3) et/ou la transmission (20) est ou sont au moins partiellement logé(s) et/ou monté(s), la transmission (20) et/ou le moteur (3) présentant un arbre (32) doté d'un agencement d'arbre (30), l'agencement d'arbre comprenant en outre les éléments suivants :
- au moins un premier palier (33) et un deuxième palier (34), lesquels sont conçus pour supporter et aligner l'arbre (32) sur ou dans le carter (40, 50),
- un troisième palier supplémentaire (36), lequel est réalisé sous la forme d'un palier de précontrainte et d'amortissement pour précontraindre axialement l'arbre (32) et l'amortir vis-à-vis de vibrations mécaniques,
**caractérisée en ce que**
- le troisième palier (36) comporte, pour la précontrainte de l'arbre (32), une bague d'appui (38) et un roulement (37), et
- le troisième palier (36) présente, pour l'amortissement de vibrations mécaniques de l'arbre (32), un élément d'amortissement (39), à la manière d'un élément élastique enserrant axialement, directement ou indirectement, une extrémité (32-1) de l'arbre (32), comportant ou constitué d'un matériau élastique et/ou amortissant.

2. Unité d'entraînement (80) selon la revendication 1, dans laquelle le troisième palier (36) est réalisé sous forme de palier fixe - en particulier terminal par rapport à l'arbre (32) - et/ou est conçu pour le montage sur ou dans un carter (40, 50).

3. Unité d'entraînement (80) selon l'une quelconque des revendications précédentes, dans laquelle le premier palier (33) est réalisé sous forme de palier libre terminal par rapport à l'arbre (32) et/ou le deuxième palier (34) est réalisé sous forme de palier fixe non terminal et en particulier central par rapport à l'arbre (32).

4. Unité d'entraînement (80) selon l'une quelconque des revendications précédentes, dans laquelle un arbre respectif (32) est réalisé sous la forme d'un arbre d'une transmission (20) et/ou sous la forme d'un arbre d'un entraînement (80) en tant qu'arbre de rotor pour un rotor (31) d'un entraînement électrique (3), pour une transmission (20) et/ou pour une unité d'entraînement (80) d'un dispositif de travail (1) pouvant être entraîné par force motrice et en particulier en outre par force musculaire, d'un véhicule (1'), d'une bicyclette, d'une bicyclette électrique, d'un eBike, d'un pedelec et/ou d'un S-pedelec.

5. Bicyclette électrique, eBike, pedelec et/ou S-pedelec, pouvant être entraîné par force musculaire et en outre par force motrice, comportant une unité d'entraînement (80) selon l'une des revendications précédentes et comportant une unité de commande (10), laquelle est conçue pour la commande de l'unité d'entraînement (80).
